# EUROPÄISCHE PATENTANMELDUNG

(11) **EP 2 256 122 A1**
(43) Veröffentlichungstag der Anmeldung: **01.12.2010**
(21) Anmeldenummer: 09159804.5
(22) Anmeldetag: 08.05.2009
(51) Int. Cl.: C07F 5/06, C07F 9/32, C07F 9/6521, C07F 9/6561, C07F 3/02, C07F 3/04, C07F 7/00, C07F 9/535

(54) **Halogenfreie Derivate des Triazins und Heptazins**

(71) Anmelder: Zylum Beteiligungsgesellschaft mbH & Co. Patente II KG, 12529 Schönefeld / Waltersdorf (DE)
(72) Erfinder: Kreipl, Andreas, Dr., 20359 Hamburg (DE); Böge, Nicolas, Dr., 20149 Hamburg (DE)
(74) Vertreter: Zech, Stefan Markus

(57) **Zusammenfassung**

Beschrieben werden Halogen-freie Verbindungen der allgemeinen Formel A-(B)₃ wobei A durch die Formel (I) oder (II) dargestellt ist 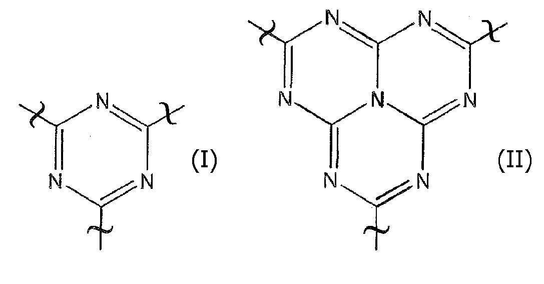 und B, unabhängig voneinander, eine -OPR¹R²R³R⁴-Gruppe, eine -OPOR¹R²-Gruppe, eine - OTiR¹R²R³-Gruppe, eine -OAlR¹R²-Gruppe, eine -OCaR¹-Gruppe oder eine -OMgR¹-Gruppe ist, wobei R¹, R², R³ und R⁴ gleich oder verschieden sind, und Wasserstoff, Alkylreste, Aryleste, Alkyloxyreste, Aryloxyreste, wobei die Reste jeweils Si, N, S und/oder O-Atome enthalten können, und/oder Hydroxygruppen darstellen, und davon abgeleitete oligomere oder polymere Formen. Des Weiteren wird beschrieben ein zweckmäßiges Verfahren zur Herstellung dieser Halogen-freien Verbindungen. Darüber hinaus wird offenbart die Verwendung dieser Verbindungen als Flammschutzmittel, so z.B. in Kunststoffen. Aufgrund des Umstandes, dass sie kein Halogen enthalten, kann sich auch im Brandfall nicht in nachteiliger Weise das giftige Chlorwasserstoffgas entwickeln. Die Hemmwirkung bleibt auch bei vergleichsweise hohen Temperaturen aufgrund der besonderen Stabilität dieser Halogen-freien Verbindungen erhalten.

## Beschreibung

### Beschreibung

Derivate vom Triazin und Heptazin sind für vielfältige Anwendungszwecke bekannt. So beschreibt die US 2,980,675 spezielle Derivate des Triazins, die Schwefel und Phosphor enthalten. Konkret handelt es sich um Thiophosphorsäureester von symmetrischen Triazinen, die zur Bekämpfung von Ungeziefer besonders geeignet sein sollen, und insbesondere eine hohe Effizienz als Insektizide haben. Ein Stand der Technik, der demjenigen nach der US 2,980,675 vergleichbar ist, ergibt sich aus der DE 29 35 560 A1. Die darin beschriebenen Organophosphorester stellen pestizide Mittel dar, insbesondere als Insektizide, Akarizide und Nematozide.

Die DE 10 2004 047 257 A1 befasst sich mit Phosphor-haltigen Heptazinderivaten, die drei Substituenten tragen. Jeder dieser Substituenten kann, unabhängig voneinander, eine Azidgruppe (-N₃) oder eine -N=PR₁R₂R₃-Gruppe darstellen, in der die Reste beispielsweise geradkettige oder verzweigtkettige Alkylreste sein können. Beansprucht wird in dieser Anmeldung die Verwendung dieser speziellen Phosphor-haltigen Heptazinderivate als Flammschutzmittel, insbesondere für Kunststoffe, Textilien, Holzprodukte, Papier, Kartonagen, Verputze, Dämmstoffe oder Baustoffverbünde. Darüber hinaus sollen sie zur Herstellung polymerer Schäume geeignet sein. Nachteilig ist bei diesen Verbindungen eine mögliche Instabilität der P-N-Doppelbindung aufgrund einer hohen Oxophilie des Phosphors, was eine längerfristige Anwendung dieser Verbindungen schwierig gestaltet oder ausschließt. Gleiche Verwendungsmöglichkeiten spricht die DE 10 2005 027 399 A1 für die darin beanspruchten Verbindungen an. Hierbei handelt es sich um Silizium- und Polysilylcyamelurate sowie -cyanurate (PSCs), die monomere aber auch polymere Form haben können. Nachteilig hierbei ist die gummiartige Masse, welche bei der Isolierung erhalten wird. Dieses weiche Material eignet sich vor allem für die Verwendung in Dichtungen, ist jedoch für die Anwendung in harten Kunststoffen nicht geeignet.

Ausgehend von dem vorstehend geschilderten Stand der Technik liegt der Erfindung die Aufgabe zugrunde, die angesprochenen Nachteile zu beheben, insbesondere neuartige Derivate des Triazins und Heptazins vorzuschlagen, die insbesondere als vorteilhafte halogenfreie Flammschutzmittel einsetzbar sind.

Diese Aufgabe wird gelöst durch Halogen-freie Verbindungen der allgemeinen Formel A-(B)₃ wobei A durch die Formel (I) oder (II) dargestellt ist 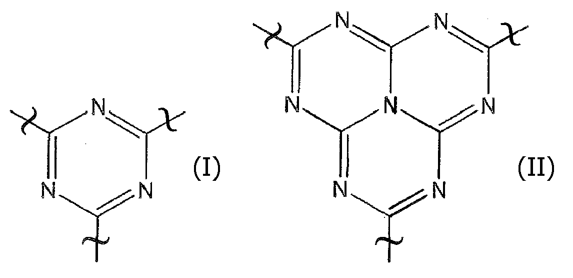 und B, unabhängig voneinander, eine -OPR¹R²R³R⁴-Gruppe, eine -OPOR¹R²-Gruppe, eine -OTiR¹R²R³-Gruppe, eine -OAlR¹R²-Gruppe, eine -OCaR¹-Gruppe oder eine -OMgR¹-Gruppe ist, wobei R¹, R², R³ und R⁴ gleich oder verschieden sind, und Wasserstoff, Alkylreste, Aryleste, Al-kyloxyreste, Aryloxyreste, wobei die Reste jeweils Si, N, S und/oder O-Atome enthalten können, und/oder Hydroxygruppen darstellen, und davon abgeleitete oligomere oder polymere Formen. Ebenso löst ein Gemisch der oben genannten Verbindungen, das sowohl A-Einheiten der Formel (I) als auch A-Einheiten der Formel (II) die erfindungsgemäße Aufgabe. Die erfindungsgemäßen Triazin- und Heptazinderivate zeichnen sich durch ihre besondere Struktur aus, wobei die Phosphor-, Titan-, Calcium-, Magnesium- und Aluminium-Reste entsprechend dem technischen Vorschlag der Erfindung über Sauerstoffatome mit der zentralen Triazin- oder Heptazineinheit verbunden sind.

Erfindungsgegenstand ist des Weiteren ein zweckmäßiges Verfahren zur Herstellung der beanspruchten Halogen-freien Verbindung, wobei dieses Verfahren dadurch gekennzeichnet ist, dass Cyanurhalogenid und/oder Trihalogeno-tri-s-triazin mit insbesondere bis zu einem Äquivalent, bezogen auf die Halogenatome, einer Verbindung des Typs PR¹R²R³R⁴R⁵, POR¹R²R³, TiR¹R²R³R⁴, AlR¹R²R³, CaR¹R², MgR¹R² in einem Lösungsmittel bzw. Lösungsmittelgemisch umgesetzt wird, wobei R¹, R², R³, R⁴ und R⁵ gleich oder verschieden sind, und Wasserstoff, Alkylreste, Aryleste, Alkyloxyreste, Aryloxyreste, wobei die Reste jeweils Si, N, S und/oder O-Atome enthalten können, und/oder Hydroxygruppen darstellen.

Alternativ lassen sich die beanspruchten Halogen-freien Verbindungen auch durch die Umsetzung von Cyanursäure und/oder Cyamelursäure, gegebenenfalls in Salzform, mit insbesondere bis zu einem Äquivalent, bezogen auf die Säureprotonen, einer Verbindung des Typs PR¹R²R³R⁴R⁵, POR¹R²R³, TiR¹R²R³R⁴, AlR¹R²R³, CaR¹R² MgR¹R² in einem Lösungsmittel umgesetzt werden, wobei R¹, R², R³, R⁴ und R⁵ gleich oder verschieden sind, und Wasserstoff, Halogene, Alkylreste, Arylreste, Alkyloxyreste, Aryloxyreste, wobei die Reste jeweils Si, N, S und/oder O-Atome enthalten können, und/oder Hydroxygruppen darstellen. Dieses Verfahren ist ebenfalls Gegenstand der Erfindung. Die verwendete Cyamelursäure kann in einfacher Weise durch basische Zersetzung von Melem (C₆H₆N₁₀) hergestellt werden. Cyanursäure ist kommerziell erhältlich. Für den Fall, dass die Cyanursäure oder die Cyamelursäure in Salzform eingesetzt werden, handelt es sich hier vorzugsweise um Natrium- oder Kaliumsalze.

Des Weiteren ist die Erfindung gerichtet auf die Verwendung der Halogen-freien Verbindungen gemäß vorliegender Erfindung als Flammschutzmittel, insbesondere für Kunststoffe, Textilien, Holzprodukte, Papier, Kartonagen, Verputze, Dämmstoffe und Baustoffverbünde, oder zur Herstellung polymerer Schäume. Nachfolgend soll auf die bevorzugten Ausgestaltungen der Erfindung eingegangen werden.

Die Halogen-freien Verbindungen sind durch die vorstehend bezeichneten Formeln (I) und (II) dargestellt. Es hat sich gezeigt, dass diese für die angesprochenen bevorzugten Zwecke der Erfindung besonders geeignet sind, wenn die Gruppe B in der allgemeinen Formel A-(B)₃ mindestens eine -OPR¹R²R³R⁴-Gruppe, eine -OPOR¹R²-Gruppe oder eine -OAlR¹R²-Gruppe ist. Besonders vorteilhaft ist es, wenn die Gruppe B entweder eine -OPR¹R²R³R⁴-Gruppe, eine -OPOR¹R²-Gruppe oder eine -OAlR¹R²-Gruppe ist.

Die Erfindung unterliegt im Hinblick auf die angesprochenen Gruppen R¹, R², R³ und R⁴ bezüglich der allgemeinen Definitionen des Anspruchs 1 keinen wesentlichen Einschränkungen. Es ist bevorzugt, dass R¹, R², R³ und R⁴ unabhängig voneinander einen Rest darstellen, der aus der Gruppe α ausgewählt ist, die besteht aus einem geradkettigen oder verzweigten (C₁-C₁₂)-Alkylrest, einem (C₃-C₇)-Cycloalkylrest, einem geradkettigen oder verzweigten (C₁-C₁₂)-Alkenylrest, einem geradkettigen oder verzweigten (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl. Die oben genannten Reste können mit jeweils 1 bis 5 Substituenten, unabhängig voneinander, versehen sein, die aus der Gruppe β ausgewählt worden sind, die besteht aus einem geradkettigen oder verzweigten (C₁-C₆)-Alkylrest, einem (C₃-C₇)-Cycloalkylrest, einem geradkettigen oder verzweigten (C₁-C₆)-Alkylenrest, einem geradkettigen oder verzweigten (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl. Ganz besonders ist es bevorzugt, wenn R¹, R², R³ und R⁴ jeweils ein geradkettiger oder verzweigter Alkyl- oder Alkoxyrest mit 1 bis 8, insbesondere 1 bis 4 Kohlenstoffatomen, ist.

Weitergehend wird es im Rahmen der Erfindung bevorzugt, dass die oben angesprochene Gruppe B eine -OAlR¹R²-Gruppe ist und R¹ und R² Wasserstoff sind.

Wie vorstehend bereits zum Ausdruck gebracht, können die erfindungsgemäßen Halogenfreien Verbindungen als Monomere vorliegen, aber auch eine oligomere oder polymere Form haben. Dabei gilt es erfindungsgemäß als bevorzugt, wenn B eine -OAlR¹R²-Gruppe, eine -OCaR¹-Gruppe oder eine -OMgR¹-Gruppe ist und R¹ und R², unabhängig voneinander, Wasserstoff oder (-O-)-Bindungen zu weiteren 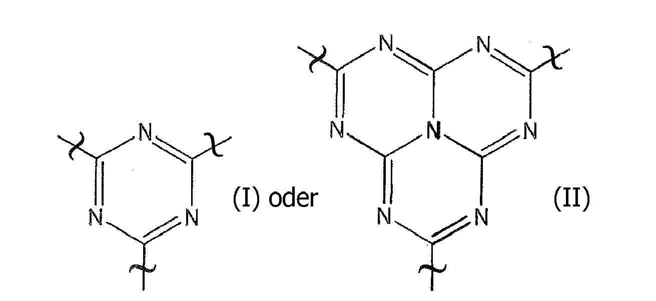
- Einheiten sind.

Wenn vorstehend davon gesprochen wird, dass bestimmte Ausführungsformen bevorzugt sind bzw. für die bei der Erfindung in Betracht gezogenen Zwecke vorteilhaft sind, dann sei darauf hingewiesen, dass insbesondere als Ausgangspunkt die zugrundegelegte Aufgabe in Betracht zu ziehen ist. Dabei erstrecken sich die bevorzugten Ausgestaltungen bezüglich der B-Komponente und deren Reste auf halogenfreie Verbindungen, die als A-Komponente ausschließlich Einheiten der Formel (I) enthalten, auf halogenfreie Verbindungen, die als A-Komponente ausschließlich Einheiten der Formel (II) enthalten, sowie auf halogenfreie Verbindungen, die ein Gemisch aus Einheiten der Formel (I) und (II) enthalten.

Auch das erfindungsgemäße Verfahren lässt sich in vielfältiger Weise vorteilhaft ausgestalten: So ist es bei der Umsetzung des Cyanurhalogenids oder Trihalogeno-tri-s-triazins bevorzugt, dass die Verbindungen als Halogenid Brom oder Chlor enthalten. Die entsprechenden Fluoride und Iodide sind hingegen weniger bevorzugt, weil die Fluoride im Allgemeinen eine geringere Reaktivität aufweisen, wohingegen die Iodide eine geringere Stabilität haben.

Bei der Umsetzung von Cyanursäure und/oder Cyamelursäure ist es bevorzugt, dass die Verbindung des Typs PR¹R²R³R⁴R⁵, POR¹R²R³, TiR¹R²R³R⁴, AlR¹R²R³, CaR¹R², MgR¹R² ebenfalls halogenfrei ist. Dies ist vorteilhaft, weil damit gegebenenfalls anfallende halogenhaltige Nebenprodukte, nicht aus dem Rohprodukt entfernt werden müssen, um die Zielverbindungen in halogenfreier Form zu erhalten. Ein weiterer Vorteil dieses Verfahrens liegt darin, dass bei Verwendung von Metallhydriden wie z.B. AlH₃, CaH₂ oder MgH₂ Wasserstoffgas entsteht, das als Treibmittel wirken kann, so dass sich auf diese Weise polymere Schäume herstellen lassen.

Die beschriebenen erfindungsgemäßen Verfahren zur Herstellung der beanspruchten Halogenfreien Verbindung sind nicht auf ein spezielles Lösungsmittel bzw. Lösungsmittelgemisch eingeschränkt. Dem Fachmann verbleibt es im Rahmen handwerklicher Bemühungen, jeweils auch das konkrete Ausgangsmaterial bedenkend, das im Einzelfall bevorzugte Lösungsmittel durch einfache Vorversuche zu ermitteln. Es hat sich gezeigt, dass als bevorzugte Lösungsmittel angegeben werden können Formamid, Dioxan, Dimethylformamid, Dimethylsulfoxid, Aceton, t-Butanol, Acetonitril, Dichlormethan, Pyridin, ein tertiäres Amin, Chlorphenol, Toluol, Ester, Ether, THF und/oder Chloroform. Bei dem Lösungsmittel bzw. Lösungsmittelgemisch sind halogenfreie gegenüber halogenhaltigen, wie Dichlormethan oder Chloroform, bevorzugt.

Des Weiteren hat es sich als vorteilhaft erwiesen, wenn bei der Durchführung des erfindungsgemäßen Verfahrens zusätzlich ein Katalysator in Form einer Base, insbesondere Pyridin, Triethylamin, KOH, Kalium-tert-butanolat, Phosphatsalze und Carbonate, einer Lewissäure, insbesondere B(OH)₃, BF₃ und AlCl₃ und/oder DMAP (Diaminopyridin), verwendet wird.

Abhängig von der Wahl der jeweiligen A- und B-Reaktanden kann es bei der Herstellung gemäß den oben genannten Verfahren zur Entstehung von Halogenwasserstoff kommen. In diesen Fällen ist es vorteilhaft, zum Abfangen der Säure stöchiometrische Mengen an Base zuzugeben.

Auch bei der Temperatur, die beim erfindungsgemäßen Verfahren eingestellt werden sollte, ist der Fachmann im Wesentlichen frei. Dennoch könnte als bevorzugter weitestgehender Rahmen für die Temperatur etwa -10 bis 150°C gelten. Hierbei läuft die Reaktion wünschenswert schnell ab und führt zu einem besonders reinen Erzeugnis.

Wie oben bereits angesprochen, verwirklicht die Erfindung durch die bezeichnete Verbindungen der angegebenen Formeln sowohl Monomere wie auch Produkte in oligomerer und polymerer Form. Es hat sich gezeigt, dass die monomeren Formen im Hinblick auf ihre Löslichkeit besonders vorteilhaft sind, während die oligomeren und polymeren Formen aufgrund des hohen Stickstoffgehalts der Verbindungen bei der Verwendung als Flammhemmer Vorteile zeigen.

Für den Fall, dass die Erfindung sich in oligomeren oder polymeren Verbindungen verwirklicht, wird es bevorzugt, dass die oben bereits angesprochenen Reste R¹ bis R⁵ der B-Komponente im Vergleich zu Halogeniden bzw. Säureprotonen der A-Komponente im Verhältnis von etwa 4 : 6 bis etwa 6 : 4 eingesetzt werden. Dabei wird jeweils auf die Gesamtsumme der Reste (R¹ + R² + R³ + R⁴ + R⁵) beziehungsweise der Halogenide und Säureprotonen abgestellt. Ganz besonders bevorzugt ist im Allgemeinen ein Verhältnis von etwa 1 : 1, weil sich damit ein möglichst hoher Polymerisierungsgrad realisieren lässt.

Die erfindungsgemäßen Verwendungsmöglichkeiten wurden vorstehend bereits angesprochen. Zur Vermeidung von Wiederholungen sei darauf verwiesen. Der besondere Vorteil der Erfindung erweist sich darin, dass sie in den angesprochenen Anwendungsfällen besonders flammhemmend sind und darüber hinaus kein Halogen enthalten. Dies ist besonders bei der Verwendung als Flammhemmer wichtig, bei denen es unter hoher Temperatur zur Freisetzung von giftigem Halogenwasserstoffgas kommen kann. Darüber hinaus ist die Herstellung von halogenfreien Verbindungen für die Umwelt weniger belastend. Weiterhin belasten die Verbindungen selbst die Umwelt nicht und sind nicht gesundheitsschädlich.

Darüber hinaus hat es sich gezeigt, dass sich die erfindungsgemäßen Verbindungen vorteilhaft und einfach in die Materialien einbringen lassen, in denen sie als Flammschutzmittel wirken sollen, insbesondere in Kunststoffe beliebiger Art. So zeigen sie eine besonders vorteilhafte Löslichkeit in einem zu schützenden Kunststoff sowie eine sehr gute Anpassung an die jeweiligen Anwendungserfordernisse. Die besondere Wirksamkeit der erfindungsgemäßen Verbindung als Flammhemmmittel ist auch darauf zurückzuführen, dass sie bis zu hohen Temperaturgraden, beispielsweise bis zu 400°C, eine sehr hohe thermische Stabilität zeigen.

Die Erfindung soll nachfolgend anhand der folgenden nicht beschränkenden Beispiele noch näher erläutert werden.

### Beispiel 1 (Aluminiumcyameluratpolymer / [(C₆N₇O₃)Al)]x)

4,21 g (18.54 mmol) Cyamelursäure werden mit 3,00 g (18.54 mmol) Al(OEt)₃ in einem Drybag unter Argon-Schutzgas sorgfältig miteinander innig vermörsert, bis eine sehr feinpulvrige homogene Masse entstanden ist.

Diese wird sodann als möglichst kompaktes Häufchen in ein Porzellanschälchen transferiert. Das Porzellanschälchen wird in einen Edelstahlbehälter gestellt, welcher mit Schutzgasspülungsanschlüssen versehen und zum Einbringen in einen Muffelofen geeignet ist.

Sodann wird die Anordnung im Muffelofen zunächst eine Stunde bei 160°, danach ca. 2 Stunden bei 200 °C Ofentemperatur gehalten, bis Gewichtskonstanz eingetreten ist. Nach der Temperaturbehandlung wird das Produkt unter Schutzgas ca. 30 Minuten in der Apparatur ausgekühlt.

Ausbeute: 4,59 g (18,28 mmol) 98.5%; Charakterisierung: IR (KBr) 3100-2800 (vw, sehr schwach strukturiert), 1614 (vs), 1451 (s), 1292 (m), 1159 (w) , 940 (w) , 779 (s), 599 (m) , 447 (s)

### Beispiel 2 (Tris-(Diethoyxphosphato)-cyamelursäureester / (C₆N₇)-[O-PO-(OEt)₂]₃)

8,2 g Kaliumcyamelurat-Trihydrat werden in 100 ml Toluol aufgeschlämmt und unter Rühren am Wasserabscheider bis zum Ende der Wasserseparation gekocht.

Sodann wird die gewonnene Masse abfiltriert, mit PE 30/50 auf der Fritte sorgfältig vom Toluol freigewaschen und im Vakuum bei RT endgetrocknet.

Von dem so gewonnenen wasserfreien Kaliumcyamelurat werden 3,4 g (10.14 mmol) in 50 ml einer Mischung THF:DMSO 2:1 (v/v) aufgeschlämmt und sodann unter Schutzgas während 10 Minuten tropfenweise mit 5,25g (30,42 mmol) Phosphorsäurediethylesterchloid versetzt, wobei der Ansatz sich geringfügig erwärmt. Es wird 30 Minuten bei Raumtemperatur und sodann 30 Minuten bei leichtem Rückfluss gerührt, abgekühlt und während weiterer 5 Minuten mit 100 ml Wasser versetzt. Nach Zugabe einer Spatelspitze Natriumhydrogencarbonat wird weitere 30 Minuten gerührt, sodann abfiltriert und der weiße Rückstand mit Wasser, Ethanol gewaschen und abschließend bei 120° getrocknet.

Ausbeute: 2,68 g (42%); IR (KBr) : 3450-2770 (w, breit, schlecht strukturiert), 1674 (s), 1584 (vs), 1475 (s), 1430 (m), 1399 (m), 1364(m), 1294(m), 1168 (w), 949 (w), 821 (m), 627 (m), 608 (m), 448 (vs)

## Patentansprüche

1. Halogenfreie Verbindungen der allgemeinen Formel A-(B)₃ wobei A durch die Formel (I) oder (II) dargestellt ist 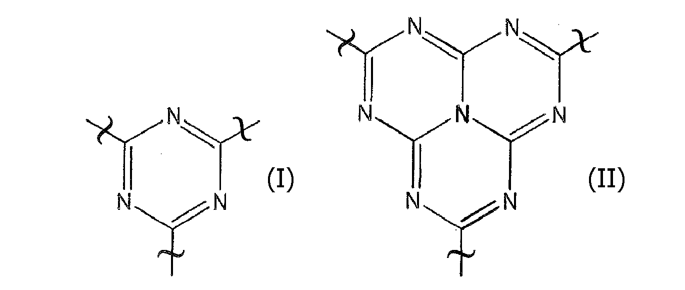 und B, unabhängig voneinander, eine -OPR¹R²R³R⁴-Gruppe, eine -OPOR¹R²-Gruppe, eine - OTiR¹R²R³-Gruppe, eine -OAlR¹R²-Gruppe, eine -OCaR¹-Gruppe oder eine -OMgR¹-Gruppe ist, wobei R¹, R², R³ und R⁴ gleich oder verschieden sind, und Wasserstoff, Alkylreste, Aryleste, Alkyloxyreste, Aryloxyreste, wobei die Reste jeweils Si, N, S und/oder O-Atome enthalten können, und/oder Hydroxygruppen darstellen,
und davon abgeleitete oligomere oder polymere Formen.

2. Halogenfreie Verbindung gemäß Anspruch 1, **dadurch gekennzeichnet, dass** B mindestens eine -OPR¹R²R³R⁴-Gruppe, eine -OPOR¹R²-Gruppe oder eine -OAlR¹R²-Gruppe ist.

3. Halogenfreie Verbindung gemäß Anspruch 2, **dadurch gekennzeichnet, dass** B entweder eine -OPR¹R²R³R⁴-Gruppe, eine -OPOR¹R²-Gruppe oder eine -OAlR¹R²-Gruppe ist.

4. Halogenfreie Verbindung gemäß einem der Ansprüche 1 bis 3, **dadurch gekennzeichnet, dass** R¹, R², R³ und R⁴ unabhängig voneinander einen Rest darstellen, der aus der Gruppe α bestehend aus einem geradkettigen oder verzweigten (C₁-C₁₂)-Alkylrest, einem (C₃-C₇)-Cucloalkylrest, einem geradkettigen oder verzweigten (C₁-C₁₂)-Alkenylrest, einem geradkettigen oder verzweigten (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl ausgewählt ist, wobei der Rest jeweils mit ein bis fünf Substituenten, unabhängig voneinander, ausgewählt aus der Gruppe β bestehend aus einem geradkettigen oder verzweigten (C₁-C₆)-Alkylrest, einem (C₃-C₇)-Cycloalkylrest, einem geradkettigen oder verzweigten (C₁-C₆)-Alkylenrest, einem geradkettigen oder verzweigten (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können.

5. Halogenfreie Verbindung gemäß einem der Ansprüche 1 bis 4, **dadurch gekennzeichnet, dass** R¹, R², R³ und R⁴ jeweils ein geradkettiger oder verzweigter Alkyl- oder Alkoxyrest mit 1 bis 8, insbesondere 1 bis 4 Kohlenstoffatomen, ist.

6. Halogenfreie Verbindung gemäß einem der Ansprüche 1 oder 3, **dadurch gekennzeichnet, dass** B eine -OAlR¹R²-Gruppe ist und R¹ und R² Wasserstoff sind.

7. Halogenfreie Verbindung gemäß einem der Ansprüche 1 bis 4, **dadurch gekennzeichnet, dass** die Verbindung in oligomerer oder polymerer Form vorliegt, B eine -OAlR¹R²-Gruppe, eine -OCaR¹-Gruppe oder eine -OMgR¹-Gruppe ist und R¹ und R², unabhängig voneinander, Wasserstoff oder (-O-)-Bindungen zu weiteren 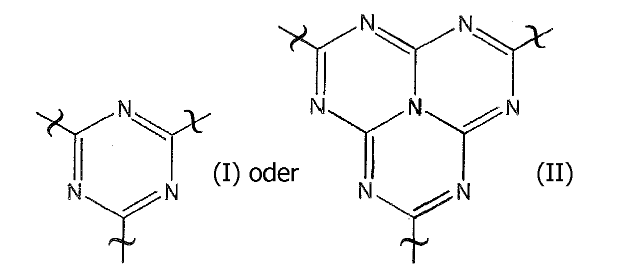 -Einheiten sind.

8. Verfahren zur Herstellung einer halogenfreien Verbindung gemäß einem der Ansprüche 1 bis 7, **dadurch gekennzeichnet, dass** Cyanurhalogenid und/oder Trihalogeno-tri-s-triazin, insbesondere mit bis zu einem Äquivalent, bezogen auf die Halogenatome, einer Verbindung des Typs PR¹R²R³R⁴R⁵, POR¹R²R³, TiR¹R²R³R⁴, AlR¹R²R³, CaR¹R², MgR¹R² in einem Lösungsmittel umgesetzt wird, wobei R¹, R², R³, R⁴ und R⁵ gleich oder verschieden sind, und Wasserstoff, Alkylreste, Aryleste, Alkyloxyreste, Aryloxyreste, wobei die Reste jeweils Si, N, S und/oder O-Atome enthalten können, und/oder Hydroxygruppen darstellen.

9. Verfahren gemäß Anspruch 8, **dadurch gekennzeichnet, dass** das Cyanurhalogenid oder Trihalogeno-tri-s-triazin Brom oder Chlor enthält.

10. Verfahren zur Herstellung einer halogenfreien Verbindung gemäß einem der Ansprüche 1 bis 7, **dadurch gekennzeichnet, dass** Cyanursäure und/oder Cyamelursäure, gegebenenfalls in Salzform, insbesondere mit bis zu einem Äquivalent, bezogen auf die Säureprotonen, einer Verbindung des Typs PR¹R²R³R⁴R⁵, POR¹R²R³, TiR¹R²R³R⁴, AlR¹R²R³, CaR¹R², MgR¹R² in einem Lösungsmittel umgesetzt werden, wobei R¹, R², R³, R⁴ und R⁵ gleich oder verschieden sind, und Wasserstoff, Halogene, Alkylreste, Aryleste, Alkyloxyreste, Aryloxyreste, wobei die Reste jeweils Si, N, S und/oder O-Atome enthalten können, und/oder Hydroxygruppen darstellen.

11. Verfahren gemäß einem der Ansprüche 8 bis 10, **dadurch gekennzeichnet, dass** als Lösungsmittel Formamid, Dioxan, Dimethylformamid, Dimethylsulfoxid, Aceton, t-Butanol, Acetonitril, Dichlormethan, Pyridin, ein tertiäres Amin, Chlorphenol, Toluol, ein Ester, ein Ether, THF und/oder Chloroform verwendet werden.

12. Verfahren gemäß einem de Ansprüche 8 bis 11, **dadurch gekennzeichnet, dass** zusätzlich ein Katalysator in Form einer Base, einer Lewissäure, und/oder DMAP verwendet wird.

13. Verfahren gemäß einem der Ansprüche 8 bis 12, **dadurch gekennzeichnet, dass** die Umsetzung bei einer Temperatur von etwa -10 bis 150 °C durchgeführt wird.

14. Verfahren gemäß einem der Ansprüche 8 bis 13, **dadurch gekennzeichnet, dass** die Reste R¹ bis R⁵ der B-Komponente im Vergleich zu Halogeniden beziehungsweise Säureprotonen der A-Komponente im Verhältnis von etwa 4 : 6 bis etwa 6 : 4 eingesetzt werden.

15. Verwendung der halogenfreien Verbindungen gemäß einem der Ansprüche 1 bis 7 als Flammschutzmittel, insbesondere für Kunststoffe, Textilien, Holzprodukte, Papier, Kartonagen, Verputze, Dämmstoffe und Baustoffverbünde, oder zur Herstellung polymerer Schäume.
